## Europäisches Patentamt
## European Patent Office
## Office européen des brevets

(19)

(11) Numéro de publication : **0 086 368 B1**

(12) # FASCICULE DE BREVET EUROPÉEN

(45) Date de publication du fascicule du brevet :
**26.03.86**

(51) Int. Cl.⁴ : **B 23 B 27/16**

(21) Numéro de dépôt : **83100662.2**

(22) Date de dépôt : **26.01.83**

(54) **Outil de coupe.**

(30) Priorité : **12.02.82 CH 876/82**

(43) Date de publication de la demande :
**24.08.83 Bulletin 83/34**

(45) Mention de la délivrance du brevet :
**26.03.86 Bulletin 86/13**

(84) Etats contractants désignés :
**DE FR GB IT**

(56) Documents cités :
**CH-A- 501 464**
**DE-A- 2 162 682**
**FR-A- 2 406 491**
**GB-A- 204 953**
**SU-A- 178 641**
**US-A- 2 808 637**
**US-A- 4 297 058**

(73) Titulaire : **STELLRAM S.A.**
*Route de l'Etraz*
**CH-1260 Nyon, Vaud (CH)**

(72) Inventeur : **Müller, Jean-Marc**

**CH-1141 Severy, Vaud (CH)**

(74) Mandataire : **Micheli, Michel-Pierre et al**
**MICHELI & CIE 118, Rue du Rhône Case Postale 47**
**CH-1211 Genève 6 (CH)**

## Description

La présente invention se rapporte à un outil de coupe pour l'usinage de matériaux composites contenant des fibres, destiné à être fixé sur un porte-outil, et présentant au moins une première arête de coupe destinée à entrer en contact avec la pièce à usiner.

Il existe depuis quelques années des matériaux composites, généralement sous forme de plaques, de tubes, etc., comportant essentiellement un constituant fibreux enrobé ou recouvert d'une résine appropriée. De tels matériaux sont très utiles, notamment lorsqu'ils sont réalisés à partir de fibres synthétiques résistantes tissées du type « Kevlar » (produit de Du Pont de Nemours), pour la construction aéronautique, aérospatiale, navale, automobile, et dans d'autres domaines industriels. Ces matériaux présentent en effet l'avantage prépondérant d'être très résistants pour un poids très faible.

Malheureusement, on ne dispose pas actuellement d'outils permettant un usinage satisfaisant de tels matériaux composites. En effet, à cause du fait que les fibres résistantes tissées et enrobées de résine ou les fragments de fibres noyés de manière aléatoire dans la résine se présentent contre l'arête de coupe d'un outil de type connu dans n'importe quelle position, l'utilisation d'un tel outil conduit à un usinage imprécis et laissant une surface hérissée d'éléments fibreux incomplètement coupés voire étirés jusque dans la zone non usinée.

Un outil de coupe du type de celui décrit par exemple dans le document SU-A-178 641 ne pourrait pas être utilisé de manière satisfaisante pour l'usinage de matériaux composites, le brise-copeaux déflecteur dont il est muni étant destiné à casser et à diriger des copeaux métalliques, mais étant totalement inefficace en présence des fibres souples présentes dans les matériaux composites.

En conséquence, le but de cette invention consiste à fournir un outil de coupe pouvant être utilisé pour usiner de manière satisfaisante un matériau composite contenant des fibres, et donnant en outre à la surface usinée un aspect lisse et libre d'éléments fibreux non coupés. L'outil de coupe selon l'invention, visant à atteindre le but précité, est caractérisé par le fait qu'il comporte au moins une seconde arête de coupe située sur au moins une partie de sa longueur au-dessus et en retrait de la première arête de coupe, et par le fait que ces deux arêtes de coupe définissent entre elles une fente donnant accès à un canal pratiqué dans l'outil, ce canal s'étendant le long de cette fente, parallèlement à celle-ci ou selon un axe faisant avec elle un angle d'au plus ± 10°, et étant ouvert à au moins une de ses extrémités.

Cet outil de coupe peut se présenter soit sous la forme d'une seule pièce destinée à être fixée de façon amovible ou non sur un porte-outil, soit sous la forme de deux plaquettes séparées destinées à être superposées et montées de façon amovible sur un porte-outil. Il peut être réalisé par exemple en métal dur fritté, en céramique ou en tout autre alliage ou matériau approprié.

Selon une variante préférée, l'outil de coupe selon l'invention peut comporter une première arête de coupe se présentant sous la forme d'une ligne brisée, une portion de cette arête servant alors de plat permettant de conférer un meilleur état de surface à la pièce usinée.

Le dessin annexé illustre schématiquement et à titre d'exemple une forme d'exécution de l'outil de coupe selon l'invention.

La figure 1 est une vue en plan partielle de l'outil en contact avec une pièce à usiner cylindrique.

La figure 2 est une vue en coupe selon la ligne AA de la figure 1.

Les figures 3A et 3B sont des vues respectivement en plan et de côté d'une réalisation de la plaquette comportant les arêtes de coupe.

Les figures 4A et 4B sont des vues respectivement en plan et de côté d'une réalisation de la plaquette comportant ladite seconde arête.

La figure 5 est une vue en plan partielle d'une variante de l'outil de coupe illustrée à la figure 1.

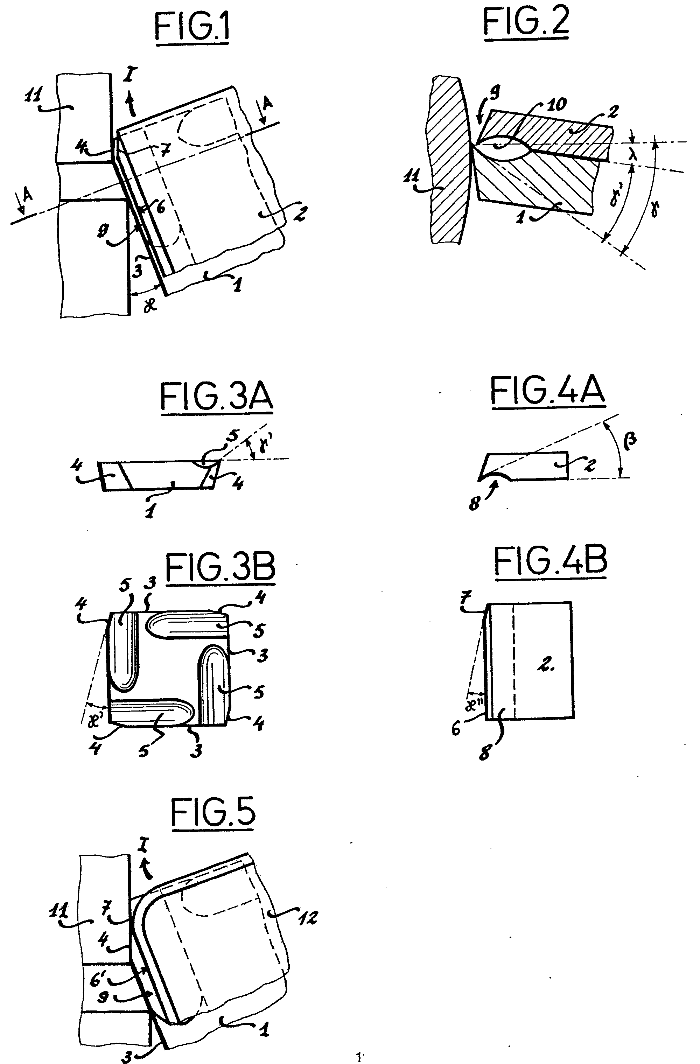

La forme d'exécution de l'outil de coupe selon l'invention, telle qu'illustrée en référence aux figures 1 à 4, comprend deux plaquettes superposées, à savoir une plaquette de coupe 1 (figures 3A et 3B) et une plaquette 2 présentant ladite seconde arête et qui sera désignée dans la description qui suit par l'indication « plaquette coupe-copeaux » (figures 4A et 4B).

La plaquette de coupe 1, ici de forme carrée, présente quatre arêtes de coupe 3, chacune en forme de ligne brisée et dont la portion biseautée 4 forme un plat dont l'utilité sera décrite plus loin. L'angle $\kappa'$ entre le plat 4 et l'arête de coupe 3 proprement dite est ici d'environ 15°. Dans des variantes non illustrées, la forme de la plaquette de coupe peut être différente, notamment quant au nombre d'arêtes de coupe. L'angle $\kappa'$ défini ci-dessus peut être compris entre environ 5° et environ 60°, mais il est de préférence compris entre 15° et 20°. La plaquette de coupe 1 comporte encore des gorges brise-copeaux 5 sensiblement parallèles aux arêtes de coupe 3 et s'étendant depuis environ le tiers de chaque arête 3 jusqu'à l'extrémité biseautée 4. Selon des variantes non illustrées, les gorges brise-copeaux peuvent s'étendre le long de tout ou partie de l'arête de coupe et selon un axe faisant avec cette arête un angle d'au plus ± 10°.

L'angle de coupe $\gamma'$ de l'arête de coupe 3 de la plaquette 1 est ici d'environ 30° (figures 2 et 3A). D'une façon générale, cet angle de coupe $\gamma'$ peut être compris entre 10 et 50°, de préférence entre 15 et 35°.

La plaquette coupe-copeaux 2 présente dans la réalisation illustrée une arête 6 unique dont une extrémité est biseautée pour former un plat 7, l'angle $\kappa''$ ayant la même valeur que l'angle $\kappa'$ de

la plaquette de coupe 1. L'arête 6 est également bordée d'une gorge 8 sensiblement parallèle à l'arête et ouverte à ses deux extrémités. L'angle β de la pente de la gorge 8 à partir de l'arête 6 est ici d'environ 30° (figure 4A), mais il peut selon d'autres réalisations non illustrées être compris entre 10 et 50°, de préférence entre 15 et 35°. De même que dans le cas de la plaquette de coupe 1, la gorge peut s'étendre selon un axe faisant avec l'arête un angle d'au plus ± 10°. Enfin, selon d'autres variantes non illustrées, la plaquette coupe copeaux peut comporter une gorge le long de chaque arête sur tout ou partie de la longueur de celle-ci.

Comme montré sur les figures 1 et 2, l'outil de coupe est constitué par la superposition des deux plaquettes 1 et 2 qui viennent d'être décrites en référence aux figures 3A, 3B, 4A et 4B. Cette superposition est réalisée de telle sorte que l'arête 6 de la plaquette coupe-copeaux 2 soit sensiblement parallèle à l'arête de coupe 3 de la plaquette de coupe 1 et légèrement en retrait de celle-ci de manière à définir une fente 9 entre elles. Cette fente 9 donne accès à un canal 10 dont les parois sont formées par les gorges respectivement 5 et 8 des deux plaquettes 1, 2 superposées et qui présente en coupe transversale la forme générale d'un C. Dans l'exemple illustré (voir figure 2), l'arête 6 de la plaquette coupe-copeaux 2 est située très légèrement au-dessus de l'arête de coupe 3 de la plaquette de coupe 1. En outre, la portion biseautée 7 de la plaquette coupe-copeaux 2 est disposée également au-dessus de la portion biseautée 4 de l'arête de coupe 3 de la plaquette de coupe 1. Dans d'autres variantes non illustrées, l'arête de la plaquette coupe-copeaux peut être située au même niveau que l'arête de coupe, voire au-dessous de celle-ci.

Les deux plaquettes 1, 2 superposées peuvent être fixées sur un porte-outil (non montré) de façon amovible ou non. Dans le premier cas, on peut utiliser des systèmes connus tels que bride, vis centrale, etc. L'utilisation du système à bride est avantageuse, puisqu'elle rend possible un ajustage de la position relative des deux plaquettes 1, 2, et plus particulièrement de la largeur de la fente 9 entre l'arête de coupe 3 et l'arête coupe-copeaux 6.

L'outil de coupe qui vient d'être décrit est utilisable plus particulièrement pour l'usinage de matériaux composites, tels que ceux constitués par des fibres synthétiques, du type « Kevlar », tissées et enrobées dans une résine. Comme montré sur la figure 1, l'arête de coupe 3 doit être disposée selon un angle κ (correspondant aux angles κ', κ'' définis précédemment) par rapport à la surface de la pièce à usiner, ici un tube cylindrique 11, de telle sorte que la portion biseautée 4 formant un plat soit appliquée contre la surface usinée avec un angle nul.

Les essais effectués ont montré que pour obtenir un usinage satisfaisant, la largeur de la fente 9 entre l'arête de coupe 3 et l'arête coupe-copeaux 6 doit être ajustée, en fonction de la profondeur de passe et l'avance choisies, de manière à ce que les copeaux soient évacués du canal 10 par son extrémité ouverte, selon la flèche I, et non par ladite fente. De plus, il a également été montré expérimentalement que pour obtenir un bon usinage, l'angle de coupe γ en position de service, correspondant à la somme de l'angle de coupe γ' de la plaquette de coupe et de l'angle d'inclinaison λ de l'outil par rapport à la normale à la surface à usiner (voir figure 2), doit être au minimum de 20°, de préférence au minimum de 25°. L'observation des copeaux obtenus a montré en outre que ceux-ci se présentaient sous la forme d'un agrégat de copeaux de résine et de fragments de fibres. Les différentes observations expérimentales ci-dessus conduisent à envisager l'hypothèse suivante en ce qui concerne le mécanisme qui permet d'obtenir un usinage nettement meilleur qu'avec les outils de coupe connus. L'arête de coupe 3 de la plaquette de coupe 1 agit sur le matériau à usiner de la même manière qu'un outil classique sur un matériau homogène. Dès le début de l'opération d'usinage, le canal 10 se remplit de copeaux pénétrant par la fente 9. Les fibres ou fragments de fibres sont ainsi emprisonnées dans le canal et ne peuvent ressortir de celui-ci. Les copeaux ont un mouvement approximativement circulaire à l'intérieur du canal 10, dans le sens inverse des aiguilles d'une montre, qui tend à les ramener vers la fente 9. Il se produit alors un mouvement de bourrage entre les copeaux contenant des fibres ou fragments de fibres qui entrent par la fente 9 et ceux qui cherchent à sortir par celle-ci mais en sont empêchés, et les copeaux subissent ainsi un effet de « hachage » par l'arête coupe-copeaux 6, qui est surtout efficace sur les fibres ou fragments de fibres. Les copeaux ainsi hachés sont ensuite évacués par le canal 10 selon la flèche I (figure 1). Il a été montré expérimentalement que, pour que l'effet de hachage des fibres soit satisfaisant et que l'arête 6 agisse comme une arête « coupe-copeaux », celle-ci doit être affûtée et résistante à l'usure.

En outre, la portion biseautée 4 formant un plat de planage vient s'appliquer lors de l'usinage sur la surface usinée, et celle-ci présente alors un état de surface d'aspect lisse et dépourvu de fragments de fibres non coupés.

Selon une variante simplifiée illustrée à la figure 5, l'arête coupe-copeaux 6' peut être constituée par l'arête de coupe d'une plaquette de coupe 12 conventionnelle à angles arrondis et fixée à l'envers sur la plaquette de coupe 1.

L'outil de coupe peut également présenter une arête de coupe rectiligne avec rayon de pointe, mais sans portion biseautée ; toutefois, pour obtenir un très bon état de surface, la présence d'un tel plat est hautement désirée voire nécessaire.

Bien entendu, d'autres formes de plaquettes de coupe sont possibles, par exemple avec un nombre de côtés égal à 3 ou supérieur à 4. L'outil de coupe peut également être formé d'une seule pièce. Dans ce cas, la largeur de la fente entre l'arête de coupe et l'arête coupe-copeaux n'est pas réglable, et il est nécessaire de prévoir plusieurs outils chacun présentant des fentes de largeur différente et étant adapté à l'usinage d'un matériau déterminé dans des conditions également déterminées.

Il est évident que dans d'autres variantes, les arêtes 3 et 6 de l'outil de coupe pourraient ne pas être strictement parallèles mais former, vues en plan, ou latéralement, un faible angle entre elles (au plus environ 5°). Dans une telle exécution, la largeur de la fente 9 serait variable et non pas constante.

A titre d'exemple d'application, on peut citer le cas de l'usinage du diamètre extérieur d'un tube en fibres de « Kevlar » tissées et noyées dans une résine synthétique. Jusqu'ici la matière à enlever, soit environ 0,5 mm au rayon, était usinée par meulage ; par ce procédé le temps de coupe était approximativement de 10 min, et il était nécessaire d'effectuer deux passages.

Par contre, par tournage avec un outil de coupe conforme à la présente invention, le même travail est effectué en une seule passe et ne nécessite qu'environ 2 1/2 min. L'état de surface de la pièce ainsi usinée est comparable, voire meilleure, à celui obtenu par meulage.

Bien entendu, l'outil de coupe selon l'invention peut être utilisé pour d'autres types d'usinages, tels que fraisage, alésage, perçage, filetage, etc., notamment de matériaux composites.

**Revendications**

1. Outil de coupe pour l'usinage de matériaux composites contenant des fibres, destiné à être fixé sur un porte-outil et présentant au moins une première arête de coupe (3) destinée à entrer en contact avec la pièce à usiner (11), caractérisé par le fait qu'il comporte au moins une seconde arête de coupe (6) située sur au moins une partie de sa longueur au-dessus et en retrait de la première arête de coupe, et par le fait que ces deux arêtes de coupe définissent entre elles une fente (9) donnant accès à un canal (10) pratiqué dans l'outil, ce canal s'étendant le long de cette fente, parallèlement à celle-ci ou selon un axe faisant avec elle un angle d'au plus ± 10°, et étant ouvert à au moins une de ses extrémités.

2. Outil de coupe selon la revendication 1, caractérisé par le fait qu'il se présente sous la forme d'une plaquette amovible réalisée d'une seule pièce.

3. Outil de coupe selon la revendication 1, caractérisé par le fait qu'il comporte deux plaquettes (1, 2) superposées, chacune de ces plaquettes présentant l'une des arêtes de coupe et une partie (5, 8) de la paroi du canal.

4. Outil de coupe selon la revendication 3, caractérisé par le fait que les deux plaquettes sont amovibles et réglables en position relativement l'une à l'autre.

5. Outil de coupe selon l'une des revendications 1 à 4, caractérisé par le fait que les première et seconde arêtes de coupe s'étendent sur une partie au moins de leur longueur parallèlement l'une à l'autre.

6. Outil de coupe selon l'une des revendications 1 à 5, caractérisé par le fait que la première arête de coupe est rectiligne.

7. Outil de coupe selon l'une des revendications 1 à 5, caractérisé par le fait que la première arête de coupe présente la forme d'une ligne brisée (4).

8. Outil de coupe selon la revendication 7, caractérisé par le fait que la seconde arête de coupe présente également la forme d'une ligne brisée (7).

9. Outil de coupe selon l'une des revendications 1 à 8, caractérisé par le fait que l'angle de coupe ($\gamma'$) de la première arête de coupe est compris entre 10 et 50°, de préférence entre 15 et 35°.

10. Outil de coupe selon l'une des revendications 1 à 8, caractérisé par le fait que l'angle ($\beta$) du tranchant de la seconde arête de coupe est compris entre 10 et 50°, de préférence entre 15 et 35°.

11. Procédé pour la mise en œuvre de l'outil de coupe selon la revendication 1, caractérisé par le fait que l'angle de coupe ($\gamma$) de la première arête de coupe en position de service par rapport à la normale à la surface à usiner est d'au moins 20°.

12. Procédé selon la revendication 11, caractérisé par le fait que ledit angle de coupe ($\gamma$) en position de service est égal à la somme de l'angle de coupe ($\gamma'$) et de l'angle d'inclination ($\lambda$) de l'outil de coupe par rapport à la normale de la surface à usiner.

**Claims**

1. Cutting tool for machining composite materials containing fibers, adapted to be secured to a tool-holder and presenting at least a first cutting edge (3) adapted to enter into contact with the piece to be machined (11), characterized by the fact that it comprises at least one second cutting edge (6) located along at least a portion of its length above and behind the first cutting edge, and by the fact that these two cutting edges define between themselves a slot (9) giving access to a channel (10) provided in the tool, this channel extending along this slot, parallel thereto or according to an axis making with it an angle of at most ± 10°, and being opened at at least one of its ends.

2. Cutting tool according to claim 1, characterized by the fact that it is under the form of a removable bit made of one single piece.

3. Cutting tool according to claim 1, characterized by the fact that it comprises two superposed bits (1, 2), each of these bits having one of said cutting edges and defining a portion (5, 8) of the wall of the channel.

4. Cutting tool according to claim 3, characterized by the fact that the two bits are removable and adjustable as to position relative to each other.

5. Cutting tool according to one of claims 1 to 4, characterized by the fact that the first and second cutting edges extend over at least a portion of their length parallel to each other.

6. Cutting tool according to one of claims 1 to 5, characterized by the fact that the first cutting edge is straight.

7. Cutting tool according to one of claims 1 to 5, characterized by the fact that the first cutting edge has the form of a broken line (4).

8. Cutting tool according to claim 7, characterized by the fact that the second cutting edge also has the form of a broken line (7).

9. Cutting tool according to one of claims 1 to 8, characterized by the fact that the cutting angle ($\gamma'$) of the first cutting edge is comprised between 10 and 50°, preferably between 15 and 35°.

10. Cutting tool according to one of claims 1 to 8, characterized by the fact that the angle ($\beta$) of cutting of the second cutting edge is comprised between 10 and 50°, preferably between 15 and 35°.

11. Process for using a cutting tool according to claim 1, characterized by the fact that the cutting angle ($\gamma$) of the first cutting edge in operative position with respect to a line perpendicular to the surface to be machined is at least 20°.

12. Process according to claim 11, characterized by the fact that said cutting angle ($\gamma$) in operative position is equal to the sum of the cutting angle ($\gamma'$) and the angle of inclination ($\lambda$) of the cutting tool with respect to a line perpendicular to the surface to be machined.

**Patentansprüche**

1. Schneidwerkzeug für die Bearbeitung von faserigem Verbundmaterial zur Befestigung auf einem Werkzeughalter und mit wenigstens einer ersten Schneide (3) zur Berührung mit dem zu bearbeitenden Teil (11), dadurch gekennzeichnet, daß es wenigstens eine zweite Schneide (6) aufweist, die sich auf wenigstens einem Teil ihrer Länge über der und zurückversetzt zur ersten Schneide befindet, und daß die beiden Schneiden zwischen sich einen Spalt (9) bilden, der einen Zutritt für einen im Werkzeug ausgebildeten Kanal (11) herstellt, wobei dieser Kanal sich längs dieses Spalts parallel zu diesem und längs einer Achse erstreckt, die mit ihm einen Winkel von höchstens ± 10° einschließt, und an wenigstens einem seiner Enden offen ist.

2. Schneidwerkzeug nach Anspruch 1, dadurch gekennzeichnet, daß es in Form eines abnehmbaren einstückigen Plättchens ausgebildet ist.

3. Schneidwerkzeug nach Anspruch 1, dadurch gekennzeichnet, daß es zwei übereinanderliegende Plättchen (1, 2) aufweist, von denen jedes die eine der Schneiden und einen Teil (5, 8) der Wand des Kanals aufweist.

4. Schneidwerkzeug nach Anspruch 3, dadurch gekennzeichnet, daß die beiden Plättchen abnehmbar und in der Stellung zueinander einstellbar sind.

5. Schneidwerkzeug nach einem der Ansprüche 1 bis 4, dadurch gekennzeichnet, daß die ersten und zweiten Schneiden sich auf wenigstens einem Teil ihrer Länge parallel zueinander erstrecken.

6. Schneidwerkzeug nach einem der Ansprüche 1 bis 5, dadurch gekennzeichnet, daß die erste Schneide geradlinig ist.

7. Schneidwerkzeug nach einem der Ansprüche 1 bis 5, dadurch gekennzeichnet, daß die erste Schneide die Form einer gebrochenen Linie ($\Delta$) hat.

8. Schneidwerkzeug nach Anspruch 7, dadurch gekennzeichnet, daß die zweite Schneide ebenfalls die Form einer gebrochenen Linie (7) hat.

9. Schneidwerkzeug nach einem der Ansprüche 1 bis 8, dadurch gekennzeichnet, daß der Schnittwinkel ($\gamma'$) der ersten Schneide 10 bis 50°, vorzugsweise 15 bis 35°, beträgt.

10. Schneidwerkzeug nach einem der Ansprüche 1 bis 8, dadurch gekennzeichnet, daß der Winkel ($\beta$) der zweiten Schneide 10 bis 50°, vorzugsweise 15 bis 35°, beträgt.

11. Verfahren zur Inbetriebnahme des Schneidwerkzeugs nach Anspruch 1, dadurch gekennzeichnet, daß der Schnittwinkel ($\gamma$) der in Betriebstellung befindlichen ersten Schneide gegenüber der Senkrechten zur zu bearbeitenden Oberfläche wenigstens 20° beträgt.

12. Verfahren nach Anspruch 11, dadurch gekennzeichnet, daß der Schnittwinkel ($\gamma$) in Betriebsstellung gleich der Summe des Schnittwinkels ($\gamma'$) und des Neigungswinkels ($\lambda$) des Schneidwerkzeugs gegenüber der Senkrechten zur zu bearbeitenden Oberfläche ist.

0 086 368

FIG.1

FIG.2

FIG.3A

FIG.4A

FIG.3B

FIG.4B

FIG.5